# EUROPÄISCHE PATENTSCHRIFT

(11) **EP 2 609 011 B1**
(45) Veröffentlichungstag und Bekanntmachung des Hinweises auf die Patenterteilung: **19.10.2016**
(21) Anmeldenummer: 11754993.1
(22) Anmeldetag: 19.08.2011
(51) Int. Cl.: B60N 3/00, B60Q 3/00, B60N 2/24, B64D 11/06, B64D 45/00

(54) **PASSAGIERSITZ**
PASSENGER SEAT
SIÈGE DE PASSAGER

(30) Priorität: 25.08.2010 DE 102010035415
(43) Veröffentlichungstag der Anmeldung: 03.07.2013
(73) Patentinhaber: Recaro Aircraft Seating GmbH & Co. KG, 74523 Schwäbisch Hall (DE)
(72) Erfinder: TSCHERWITSCHKE, Timo, 74632 Neuenstein-Eschelbach (DE); GALL, Peter, 71336 Waibingen (DE)
(74) Vertreter: Daub, Thomas
(86) Internationale Anmeldenummer: PCT/EP2011/004181
(87) Internationale Veröffentlichungsnummer: WO 2012/025212

(56) Entgegenhaltungen:
- DE-A1- 10 045 689
- FR-A1- 2 935 653
- US-A1- 2004 195 875

## Beschreibung

### Stand der Technik

Aus der DE 32 19 710 A1 ist bereits ein Passagiersitz bekannt, der ein erstes Sitzelement und zumindest ein zweites Sitzelement aufweist, die relativ zueinander bewegbar sind, und der auf einem Boden eines Transportmittels aufständerbar ist und zumindest eine optische Übertragungseinheit aufweist mit einem Lichteintrittselement und zumindest einem Lichtaustrittselement.

Aus der FR 2 935 653 A1 ist bereits ein Passagiersitz bekannt, der eine optische Übertragungseinheit aufweist, die zumindest einen Lichtführungsweg aufweist, der vom Lichteintrittselement zum Lichtaustrittselement verläuft und entlang dem Licht geführt ist, wobei die optische Übertragungseinheit dazu vorgesehen ist, in zumindest einem Betriebszustand an zumindest einer Stelle des Lichtführungswegs, die sich von einer Stelle eines Lichteintritts in das Lichteintrittselement und von einer Stelle eines Lichtaustritts aus dem Lichtaustrittselement unterscheidet, berührungslos Licht zu übertragen.

Der Erfindung liegt die Aufgabe zugrunde, einen gattungsgemäßen Passagiersitz bereitzustellen, durch den eine Zuverlässigkeit einer Lichtübertragung zwischen Sitzelementen erhöht werden kann.

Diese Aufgabe ist durch einen Passagiersitz gemäß dem Patentanspruch 1 gelöst. Weitere vorteilhafte Ausführungen der Erfindung können den Unteransprüchen entnommen werden.

### Vorteile der Erfindung

Die Erfindung geht aus von einem Passagiersitz, der ein erstes Sitzelement und zumindest ein zweites Sitzelement aufweist, die relativ zueinander bewegbar sind, und der auf einem Boden eines Transportmittels aufständerbar ist und zumindest eine optische Übertragungseinheit aufweist mit einem Lichteintrittselement und zumindest einem Lichtaustrittselement. Die Sitzelemente können beispielsweise als Sitzboden, auf dem ein Passagier Platz nimmt, als Rückenlehne, die eine Rückenpartie des Passagiers unterstützt, als Sitzumhausungselement oder als Armlehne ausgebildet sein. Der Passagiersitz kann auch noch weitere, dem Fachmann bekannte Sitzelemente aufweisen.

Das erste Sitzelement und das zweite Sitzelement sind in einem Normalbetrieb des Passagiersitzes relativ zueinander bewegbar. Sie können grundsätzlich aber auch im Normalbetrieb des Passagiersitzes relativ zueinander feststehend angeordnet und nur in zumindest einer anderen, vom Normalbetrieb verschiedenen Betriebsweise des Passagiersitzes relativ zueinander bewegbar sein. Eine solche, vom Normalbetrieb verschiedene Betriebsweise kann beispielsweise ein Wartungsmodus des Passagiersitzes sein.

Unter einem "Lichteintrittselement" soll in diesem Zusammenhang insbesondere ein Element der optischen Übertragungseinheit verstanden werden, an dem ein von einer Lichtquelle erzeugtes Licht in den Lichtführungsweg eintritt. Unter "berührungsloser Übertragung von Licht" soll in diesem Zusammenhang insbesondere verstanden werden, dass der Lichtführungsweg zumindest einen Bereich aufweist, in dem außer der allseits vorhandenen Luft kein anderes Material, insbesondere kein Feststoff, angeordnet ist. Unter "diskreten, voneinander abgegrenzten Bereichen einer relativen Stellung" soll in diesem Zusammenhang insbesondere verstanden werden, dass ein Bewegungsbereich des zweiten Sitzelements relativ zum ersten Sitzelement in eine endliche Anzahl zusammenhängender Bereiche aufgeteilt ist, wobei Bereiche mit Übertragung von Licht und Bereiche ohne Übertragung von Licht einander während einer kontinuierlichen Bewegung des zweiten Sitzelements von einer Anfangsstellung zu einer Endstellung abwechseln. Dadurch kann bei einer entsprechenden Ausgestaltung vorteilhaft eine Anzeige einer relativen Anordnung zwischen den Sitzelementen erzielt werden.

Es kann bei entsprechender Ausgestaltung eine Lösung zur Übertragung von Licht bereitgestellt werden, die in einem Bereich des Lichtführungswegs eine bekannte Verwendung von elektrischen Kabeln und lichtführenden Fasern und dadurch eine Beanspruchung der elektrischen Kabel und lichtführenden Fasern auf Torsion und/oder Biegung bei einer relativen Bewegung von Sitzelementen vermeidet, wodurch vorteilhaft Materialermüdungsbrüchen vorgebeugt ist und die Betriebszuverlässigkeit der Übertragung von Licht im Passagiersitz erhöht werden kann.

In dem zuvor beschriebenen Fall, dass das erste und das zweite Sitzelement im Normalbetrieb des Passagiersitzes relativ zueinander feststehend angeordnet, im Wartungsmodus des Passagiersitzes jedoch relativ zueinander bewegbar sind, kann bei einer entsprechenden Ausgestaltung eine Wartungsprozedur vorteilhaft vereinfacht werden, da eine Auftrennung eines elektrischen Kabels oder einer lichtführenden Faser vermieden und/oder eine notwendige Justierung einer relativen Stellung zwischen dem ersten Sitzelement und dem zweiten Sitzelement einfacher ausgeführt werden kann.

Vorteilhaft kann die optische Übertragungseinheit eine Lichtemissionseinheit, die dazu vorgesehen ist, Licht auszusenden, und eine Lichtsammeleinheit umfassen, die dazu vorgesehen ist, das von der Lichtemissionseinheit ausgesandte Licht in zumindest einem Betriebszustand zumindest teilweise aufzunehmen, wodurch eine einfache Anordnung zur berührungslosen Übertragung von Licht erreicht werden kann.

In einer vorteilhaften Ausgestaltung wird vorgeschlagen, dass die Lichtemissionseinheit der optischen Übertragungseinheit an dem ersten Sitzelement und die Lichtsammeleinheit der optischen Übertragungseinheit an dem zweiten, relativ zum ersten Sitzelement bewegbaren Sitzelement angeordnet ist. Dadurch kann eine besonders einfache Lösung zur Übertragung von Licht bei gleichzeitiger Vermeidung einer mechanischen Beanspruchung von elektrischen Kabeln und lichtführenden Fasern auf Torsion und/oder Biegung bei relativer Bewegung der Sitzelemente erreicht werden.

Zudem wird vorgeschlagen, dass der Lichtführungsweg zumindest teilweise von zumindest einem Lichtwellenleiter gebildet ist. Unter einem "Lichtwellenleiter" soll in diesem Zusammenhang insbesondere ein zylinderförmiger Körper aus einem lichtdurchlässigen Material verstanden werden, dessen optischer Brechungsindex größer ist als der optische Brechungsindex eines den zylinderförmigen Körper direkt umgebenden Materials. Unter einem "zylinderförmigen Körper" soll in diesem Zusammenhang insbesondere eine Körperform verstanden werden, die durch eine Verschiebung einer ebenen Fläche oder Kurve entlang einer Geraden, die nicht in dieser Ebene liegt, entsteht. Dadurch kann eine besonders flexible Möglichkeit einer Lichtführung erreicht werden. Bevorzugt können Lichtwellenleiter aus Glas und/oder transparentem Kunststoff hergestellt sein.

In bekannter Weise können auch Bündelungen von Lichtwellenleitern verwendet werden, die eine vorteilhaft große optische Apertur aufweisen, durch die das Licht in den Lichtwellenleiter einfach ein- und auskoppelbar ist.

Des Weiteren wird vorgeschlagen, dass die optische Übertragungseinheit zumindest eine Kollimatoreinheit aufweist. Unter einer "Kollimatoreinheit" soll in diesem Zusammenhang insbesondere eine Einheit aus optischen Elementen verstanden werden, die dazu vorgesehen ist, aus einer im Wesentlichen punktförmigen Lichtquelle einen parallelen Lichtstrahl zu erzeugen. Dadurch kann eine Strahlaufweitung des Lichts in einer Richtung senkrecht zum Lichtführungsweg erzielt werden, wodurch vorteilhaft Bauteil- und Justierungstoleranzen ausgeglichen und eine Lichtführung vereinfacht werden.

Weiterhin wird vorgeschlagen, dass das Lichtaustrittselement von einem Strahlaufweitungselement gebildet ist. Unter einem "Strahlaufweitungselement" soll in diesem Zusammenhang insbesondere ein optisches Element mit einer optischen Achse verstanden werden, das bei einem achsparallel einfallenden Lichtstrahl ein Divergieren des Lichtstrahls bewirkt, so dass dieser von der optischen Achse wegstrebt. Dadurch kann eine gute Sichtbarkeit von Lichtsignalen, insbesondere in einer seitlichen Ansicht auf das Lichtaustrittselement, erreicht werden.

In einer weiteren vorteilhaften Ausgestaltung ist das erste Sitzelement von einem relativ zum Boden des Transportmittels fest angeordneten Sitzumhausungselement gebildet. In einer entsprechenden Ausgestaltung kann dadurch eine zuverlässige und kostengünstige Versorgung eines Passagiersitzes oder mehrerer Passagiersitze mit Licht einer externen Lichtquelle erzielt werden.

Wenn die berührungslose Übertragung des Lichts in zumindest einem Betriebszustand zwischen dem relativ zum Boden des Transportmittels fest angeordneten Sitzumhausungselement und einem dazu relativ bewegbaren Sitzelement erfolgt, kann bei entsprechender Ausgestaltung eine zuverlässige und kostengünstige Einleitung von Licht, beispielsweise zu Lesezwecken oder zu einer Informationsanzeige, aus einer zentralen, fest in dem Transportmittel installierten Lichtversorgung, auch simultan in mehrere nebeneinander angeordnete Passagiersitze, ermöglicht werden.

Wenn das erste Sitzelement von einem Sitzboden und das zweite Sitzelement von einer Armlehne gebildet ist, kann eine besonders zuverlässige Lösung zur Übertragung von Licht in die Armlehne bereitgestellt werden. Unter einem "Sitzboden" soll in diesem Zusammenhang insbesondere ein Sitzelement des Passagiersitzes verstanden werden, das den Passagier in einer Sitzposition abstützt und das üblicherweise mit einer aufliegenden Polsterung ausgestattet ist. Vorteilhaft können insbesondere Lichtsignale wie ein "In Use-Light", die einen Status einer Nutzung einer Zusatzeinrichtung des Passagiersitzes, wie beispielsweise eine Spannungsversorgung für einen PC (Personal Computer) oder für Unterhaltungselektronik (In Flight-Entertainment, IFE), von dem ersten Sitzelement, das beispielsweise als Sitzboden oder als Element einer Sitzstruktur ausgebildet ist, in eine relativ zu dem ersten Sitzelement bewegbare Armlehne übertragen werden, wo sie für Mitglieder eines Bordpersonals leicht kontrollierbar angezeigt werden können. Eine Installation eines elektrischen Kabels oder eines von einer lichtführenden flexiblen Faser gebildeten Lichtwellenleiters zwischen dem ersten Sitzelement und der bewegbaren Armlehne kann entfallen, wodurch die Betriebszuverlässigkeit der Signalanzeige erhöht werden kann.

Außerdem wird vorgeschlagen, dass die berührungslose Übertragung des Lichts zumindest in einem Bereich einer Endstellung der Armlehne erfolgt. Auf diese Weise können die besonderen Lichtsignale wie das "In-Use-Light" und gleichzeitig eine relative Anordnung zwischen der Armlehne und anderen Sitzelementen von den Mitgliedern des Bordpersonals kontrolliert werden, wie dies beispielsweise bei Flugzeugen in bestimmten Phasen einer Landung erforderlich ist.

### Zeichnungen

Weitere Vorteile ergeben sich aus der folgenden Zeichnungsbeschreibung. In den Zeichnungen sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines als Fluggastsitz ausgebildeten Passagiersitzes in einem Einbauzustand,
- Fig. 2: eine Detailansicht des Passagiersitzes gemäß der Fig. 1 in einer Draufsicht,
- Fig. 3: eine Detailansicht der optischen Übertragungseinheit mit einer Kollimatoreinheit,
- Fig. 4: eine Abhängigkeit eines aus einem Lichtaustrittselement austretenden Lichts von einem Schwenkwinkel einer Armlehne des Passagiersitzes gemäß der Fig. 1,
- Fig. 5: eine schematische Darstellung eines weiteren, als Fluggastsitz ausgebildeten Passagiersitzes in einer Normalposition,
- Fig. 6: den Passagiersitz gemäß der Fig. 5 in einer Komfort- und Liegeposition und
- Fig. 7: den Passagiersitz gemäß der Fig. 5 in einer Vorderansicht.

### Beschreibung des Ausführungsbeispiels

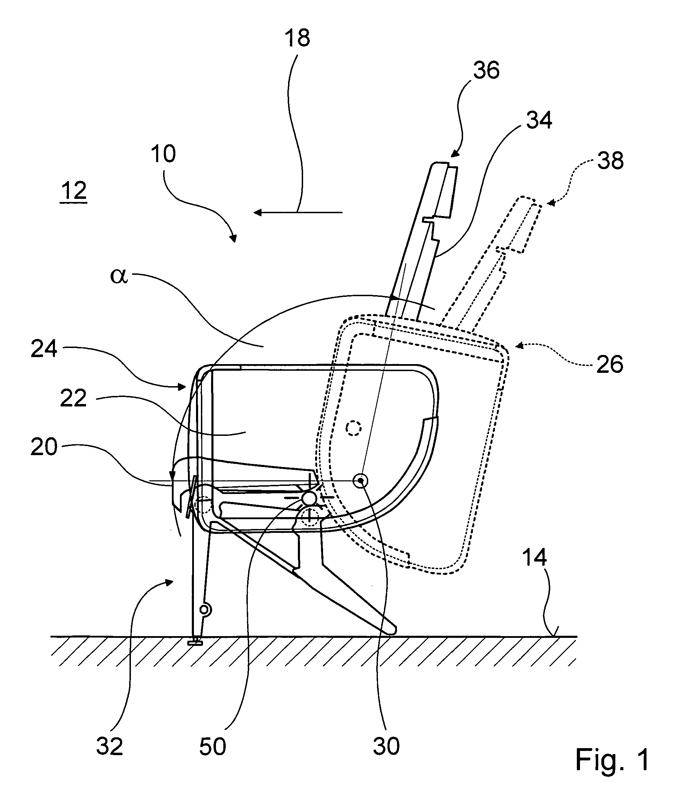

Figur 1 zeigt in einer Seitenansicht in einer schematischen Darstellung einen als Fluggastsitz 10 ausgebildeten Passagiersitz in einem Einbauzustand in einem Innenraum 12 eines nicht näher dargestellten, als Flugzeug ausgebildeten Transportmittels. Der Passagiersitz kann in weiteren Ausführungen aber auch in weiteren Transportmitteln genutzt werden, und zwar beispielsweise in einem Eisenbahnwagen, einem Reisebus oder einem Passagierschiff.

Der Fluggastsitz 10 weist mehrere Sitzelemente 20, 22, 32, 34 auf. Ein als Sitzboden ausgebildetes erstes Sitzelement 20 ist oberhalb eines als Sitzstruktur ausgebildeten dritten Sitzelements 32 angeordnet, mit dem der Fluggastsitz 10 auf einem Boden 14 des Innenraums 12 des Flugzeugs aufgeständert ist. Ein zweites Sitzelement 22 des Fluggastsitzes 10 ist als Armlehne ausgebildet, die relativ zum Sitzboden bewegbar ist. Die Armlehne ist zwischen einer Nutzposition 24 und einer Freigabeposition 26 durch Schwenken um eine Armlehnenachse 30 bewegbar, um für Passagiere mit einer Gehbehinderung einen einfacheren Zugang zum Fluggastsitz 10 zu schaffen. Sowohl die Nutzposition 24 als auch die Freigabeposition 26 stellen Endstellungen einer Schwenkbewegung der Armlehne um die Armlehnenachse 30 dar. Der Fluggastsitz 10 weist eine Sitzrichtung 18 auf, die im betrachteten Beispiel einer Transportrichtung bzw. einer Flugrichtung entspricht. Die Armlehnenachse 30 ist senkrecht zur Sitzrichtung 18 und parallel zum Boden 14 des Innenraums 12 des Flugzeugs angeordnet.

An einem in der Sitzrichtung 18 gesehen hinteren Ende des als Sitzboden ausgebildeten ersten Sitzelements 20 ist ein von einer Rückenlehne gebildetes weiteres Sitzelement 34 angeordnet, das zwischen einer im Wesentlichen senkrecht zum Boden 14 des Innenraums 12 des Flugzeugs angeordneten Sitzposition 36 und einer zum Boden des Innenraums 12 des Flugzeugs geneigten Komfortposition 38 schwenkbar ist.

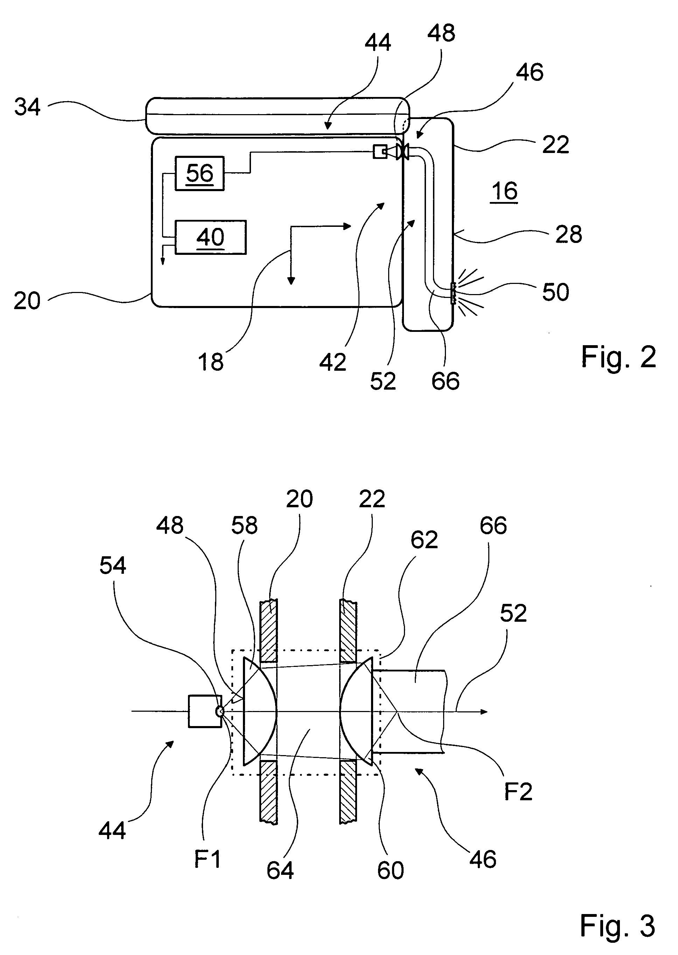

Die Fig. 2 zeigt eine Detailansicht des Fluggastsitzes 10 in einer Draufsicht. Der Fluggastsitz 10 ist an einem Gang 16 des Innenraums des Flugzeugs angeordnet. In der Fig. 2 ist die dem Gang 16 zugewandte Armlehne gezeigt, die den Sitzboden quer zur Sitzrichtung 18 gegen den Gang 16 abdeckt. Der Fluggastsitz 10 umfasst in bekannter Weise eine nicht näher dargestellte Spannungsversorgungseinheit 40, die dazu vorgesehen ist, einen Laptop-Computer eines Passagiers mit einer Betriebsspannung zu versorgen. Zu einer Kontrolle einer Nutzung der Spannungsversorgungseinheit 40 durch den Laptop-Computer des Passagiers weist der Fluggastsitz 10 ein Lichtaustrittselement 50 auf ("In-Use Light"), das als Strahlaufweitungselement in Form einer konkaven Fresnel-Linse aus transparentem Kunststoff an einer gangseitigen Außenfläche 28 der Armlehne angeordnet ist.

Zur Versorgung des Lichtaustrittselements 50 mit Licht weist der Fluggastsitz 10 eine optische Übertragungseinheit 42 auf, die eine Lichtemissionseinheit 44, die an dem von dem Sitzboden gebildeten ersten Sitzelement 20 angeordnet ist, eine Lichtsammeleinheit 46, die an dem von der Armlehne gebildeten zweiten Sitzelement 22 angeordnet ist, und einen Lichtführungsweg 52, der von einem Lichteintrittselement 48 (Fig. 3) der optischen Übertragungseinheit 42 zum Lichtaustrittselement 50 der optischen Übertragungseinheit 42 verläuft und entlang dem das Licht geführt ist, umfasst.

Die Lichtemissionseinheit 44 weist eine von einer Leuchtdiode 54 gebildete Lichtquelle und eine nicht näher dargestellte Ansteuereinheit 56 auf, die dazu vorgesehen ist, die Leuchtdiode 54 in Abhängigkeit von der Nutzung der Spannungsversorgungseinheit 40 mit einer Betriebsspannung zu versorgen. Die Leuchtdiode 54 ist im Brennpunkt F1 einer ersten plan-konvexen optischen Sammellinse 58 angeordnet, die als Lichteintrittselement 48 der optischen Übertragungseinheit 42 dient und Teil einer Kollimatoreinheit 62 der optischen Übertragungseinheit 42 ist (Fig. 3). Ein von der Leuchtdiode 54 erzeugtes Licht wird von der plan-konvexen ersten optischen Sammellinse 58 in bekannter Weise teilweise gesammelt und in einen näherungsweise achsparallelen Lichtstrahl 64 umgewandelt.

Ist die Armlehne in der Nutzposition 24 angeordnet, trifft der näherungsweise achsparallele Lichtstrahl 64 im weiteren Verlauf des Lichtführungswegs 52 auf die Lichtsammeleinheit 46, die in der Armlehne angeordnet ist. Zunächst fällt der näherungsweise achsparallele Lichtstrahl 64 auf eine weitere plan-konvexe optische Sammellinse 60 der Kollimatoreinheit 62 der optischen Übertragungseinheit 42. Dadurch wird der näherungsweise achsparallele Lichtstrahl 64 in einem Brennpunkt F2 der weiteren plan-konvexen optischen Sammellinse 60 gebündelt und in einen Lichtwellenleiter 66 der Lichtsammeleinheit 46 übertragen, der im Anschluss an die weitere plan-konvexe optische Sammellinse 60 einen Teil des weiteren Lichtführungswegs 52 bildet. Ein von der Leuchtdiode 54 entferntes Ende des Lichtwellenleiters 66 ist mit dem Lichtaustrittselement 50 der optischen Übertragungseinheit 42 an der gangseitigen Außenfläche 28 der Armlehne verbunden, so dass das Licht am Lichtaustrittselement 50 der optischen Übertragungseinheit 42 den Fluggastsitz 10 verlässt (Fig. 2). Der Lichtwellenleiter 66 ist flexibel ausgebildet, wodurch eine besonders leichte Verlegbarkeit und eine große Designfreiheit bei der Wahl eines Orts für das Lichtaustrittselement 50 auf der gangseitigen Außenfläche 28 der Armlehne erreicht werden. Grundsätzlich kann der Lichtwellenleiter 66 aber auch starr ausgebildet sein, indem beispielsweise das Lichtaustrittselement 50 und die weitere plan-konvexe optische Sammellinse 60 in einer Richtung fluchten, die senkrecht zur Sitzrichtung 18 und parallel zum Boden 14 des Innenraums 12 des Flugzeugs ausgerichtet ist.

In einem Betriebszustand, der einer Anordnung der Armlehne in der Nutzposition 24 und einer gleichzeitigen Nutzung der Spannungsversorgungseinheit 40 durch den Passagier entspricht, ist die optische Übertragungseinheit 42 dazu vorgesehen, an einer Stelle des Lichtführungswegs 52 zwischen der ersten plan-konvexen optischen Sammellinse 58 der Kollimatoreinheit 62 und der zweiten plan-konvexen optischen Sammellinse 60 der Lichtsammeleinheit 46 berührungslos Licht zu übertragen. Diese Stelle des Lichtführungswegs 52 unterscheidet sich von einer Stelle des Lichteintritts in das Lichteintrittselement 48 der optischen Übertragungseinheit 42 und auch von einer Stelle des Lichtaustritts aus dem Lichtaustrittselement 50 der optischen Übertragungseinheit 42.

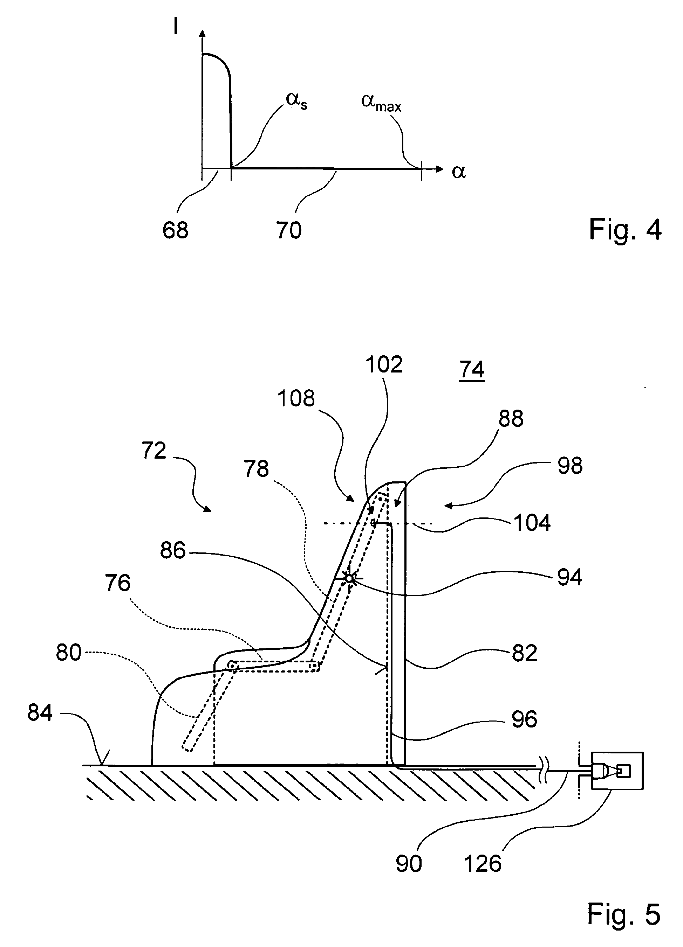

Wird die Armlehne aus der Nutzposition 24 heraus um einen Winkel αₘₐₓ bis zur Freigabeposition 26 geschwenkt, so gelangt in Abhängigkeit von einem Schwenkwinkel α und geometrischen Verhältnissen innerhalb der Kollimatoreinheit 62 in bekannter Weise ein Teil einer Lichtintensität I bis zum Lichtaustrittselement 50 der optischen Übertragungseinheit 42. Ab einem Grenzschwenkwinkel αₛ der Armlehne fällt kein Teil des näherungsweise achsparallelen Lichtstrahls 64 mehr auf die Lichtsammeleinheit 46, und es tritt kein Licht mehr aus dem Lichtaustrittselement 50 der optischen Übertragungseinheit 42 aus (Fig. 4).

Die berührungslose Übertragung des Lichts von dem als Sitzboden ausgebildeten ersten Sitzelement 20 zu dem davon verschiedenen, als Armlehne ausgebildeten zweiten Sitzelement 22, das relativ zum Sitzboden bewegbar ist, erfolgt demnach in zwei diskreten, voneinander abgegrenzten Bereichen 68, 70 des Schwenkwinkels α der Armlehne, der eine relative Stellung des Sitzbodens und der Armlehne bezeichnet (Fig. 4). Insbesondere erfolgt die berührungslose Übertragung des Lichts in einem Bereich einer der beiden Endstellungen der Armlehne.

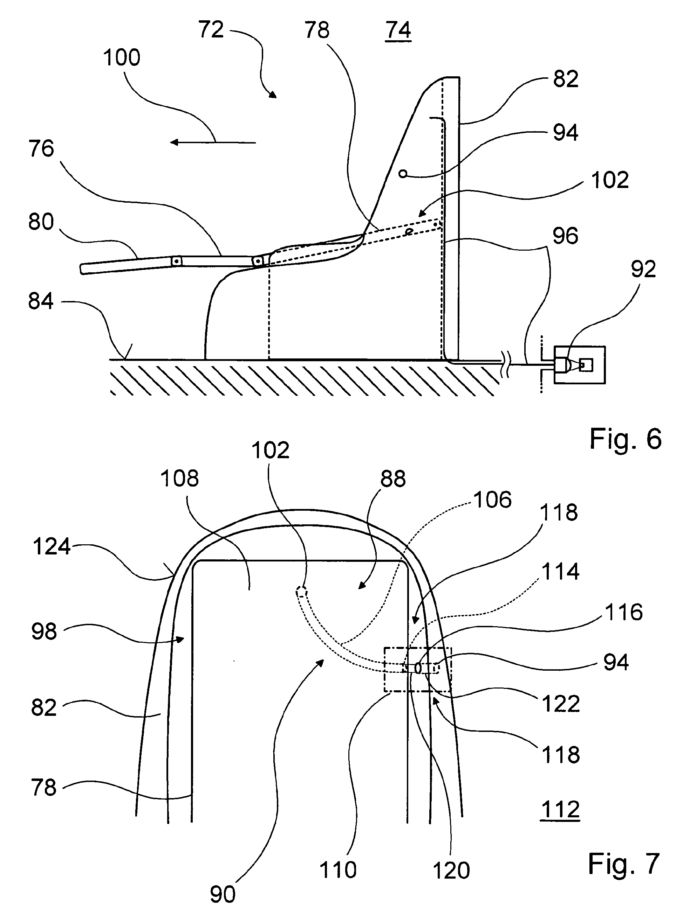

Die Figuren 5, 6 und 7 zeigen als ein alternatives Ausführungsbeispiel in einer stark schematisierten Darstellung in einer Seitenansicht einen als First Class-Fluggastsitz 72 ausgebildeten Passagiersitz in einem Einbauzustand in einem Innenraum 74 eines nicht näher dargestellten, als Flugzeug ausgebildeten Transportmittels. Der Fluggastsitz 72 umfasst mehrere Sitzelemente 76, 78, 80, die jeweils als Sitzboden, Rückenlehne und Beinauflage ausgebildet und in bekannter Weise relativ zueinander zwischen einer Normalposition des Fluggastsitzes 72 gemäß der Fig. 5 und einer Komfort- und Liegeposition des Fluggastsitzes 72 gemäß Fig. 6 durch eine an sich bekannte, aus Gründen der Übersichtlichkeit nicht dargestellte, mechanische Verstellvorrichtung bewegbar sind. Die Verstellvorrichtung dient ferner dazu, den Fluggastsitz 72 auf einem Boden 84 des Innenraums 74 des Flugzeugs aufzuständern.

Der Fluggastsitz 72 weist weiterhin ein relativ zum Boden 84 des Innenraums 74 des Flugzeugs fest angeordnetes Sitzumhausungselement 82 auf, in das eine Armlehne des Fluggastsitzes 72 integriert ist. In der Fig. 5 ist die einem Gang 112 des Innenraums 74 zugewandte Armlehne dargestellt. Bei einer Bewegung des Fluggastsitzes 72 zwischen der Normalposition und der Komfort- und Liegeposition wird die Rückenlehne durch die Verstellvorrichtung mit einem Kopfstützenbereich 108 entlang einer inneren Rückseite 86 des Sitzumhausungselements 82 geführt.

Sicherheitsrichtlinien erfordern, dass der Fluggastsitz 72 während bestimmter Transportsituationen (Taxi, Take-Off, Landing) in der Normalposition eingestellt ist. Eine entsprechende Überprüfung durch das Flugpersonal ist üblicher Bestandteil diesbezüglicher Prozeduren. Zur Vereinfachung der Überprüfung weist der Fluggastsitz 72 eine optische Übertragungseinheit 88 auf, deren Funktion im Folgenden beschrieben wird.

Die optische Übertragungseinheit 88 umfasst eine Lichtquelle 126, die dazu vorgesehen ist, gleichzeitig Licht mehrerer optischer Übertragungseinheiten in benachbarten Fluggastsitzen einer Fluggastsitzreihe bereitzustellen. Aus Gründen der Übersichtlichkeit ist diese dem Fachmann geläufige Anordnung nicht näher dargestellt. Eine Einkopplung des Lichts in einen Lichtführungsweg 90 der optischen Übertragungseinheit 88 erfolgt an einem als Sammellinse ausgebildeten Lichteintrittselement 92 (Fig. 6). Auf einer der Lichtquelle 126 abgewandten Seite der Sammellinse ist ein weiterer Teil des Lichtführungswegs 90 von einem Lichtwellenleiter 96 gebildet, der in einem Teilbereich fest im Boden 84 des Innenraums 74 des Flugzeugs installiert und bis zu dem Fluggastsitz 72 geführt ist. Dieser Teil des Lichtwellenleiters 96 ist nicht näher dargestellt. Der Lichtwellenleiter 96 ist weiterhin entlang der inneren Rückseite 86 des Sitzumhausungselements 82 fest installiert, endet in einem oberen Bereich 98 des Sitzumhausungselements 82 und ist an dieser Stelle parallel zu einer Sitzrichtung 100 ausgerichtet, die im betrachteten Beispiel einer Transportrichtung bzw. einer Flugrichtung entspricht. Der Lichtwellenleiter 96 bildet somit eine Lichtemissionseinheit der optischen Übertragungseinheit 88, die an dem als Sitzumhausungselement 82 ausgebildeten Sitzelement angeordnet ist.

Im Kopfstützenbereich 108 der Rückenlehne weist der Fluggastsitz 72 eine von einer weiteren Sammellinse gebildete Lichtsammeleinheit 102 auf (Fig. 5). In der Normalposition des Fluggastsitzes 72 fluchten eine optische Achse 104 der weiteren Sammellinse der Lichtsammeleinheit 102 und eine Ausrichtungsrichtung eines Endes des im oberen Bereich 98 des Sitzumhausungselements 82 angeordneten Lichtwellenleiters 96 weitgehend, so dass Licht entlang des Lichtführungswegs 90 aus dem Lichtwellenleiter 96 im oberen Bereich 98 des Sitzumhausungselements 82 austritt und in die Lichtsammeleinheit 102 eintreten kann.

Auf diese Weise erfolgt durch die optische Übertragungseinheit 88 in einem Betriebszustand der Normalposition des Fluggastsitzes 72 eine berührungslose Übertragung des Lichts zwischen dem relativ zum Boden 84 des Innenraums 74 des Flugzeugs fest angeordneten Sitzumhausungselement 82 und dem dazu relativ bewegbaren, als Rückenlehne ausgebildeten Sitzelement 78 des Fluggastsitzes 72.

Die Sammellinse der Lichtsammeleinheit 102 ist optisch mit einem flexiblen Lichtwellenleiter 106 gekoppelt, der innerhalb der Rückenlehne von einer Rückseite des Kopfstützenbereichs 108 der Rückenlehne bis zu einem dem Gang 112 zugewandten Seitenbereich 110 der Rückenlehne verlegt ist (Fig. 7). Ein dort angeordnetes Ende des Lichtwellenleiters 106 ist in einer Richtung, die senkrecht zu der Sitzrichtung 100 und parallel zum Boden 84 des Innenraums 74 des Flugzeugs verläuft, ausgerichtet und an eine weitere Sammellinse 114 optisch angekoppelt, die Teil einer Kollimatoreinheit 118 ist, deren Funktionsweise identisch ist mit der Funktionsweise der Kollimatoreinheit 62 des ersten Ausführungsbeispiels, so dass auf eine Erläuterung zur Vermeidung von Wiederholungen an dieser Stelle verzichtet wird. Die weitere Sammellinse 114 wandelt das Licht am Ende des Lichtwellenleiters 106 in einen nahezu achsparallelen Lichtstrahl 120 um. In der Richtung, in die das dem Gang 112 zugewandte Ende des Lichtwellenleiters 106 in der Normalposition des Fluggastsitzes 72 ausgerichtet ist, ist an der inneren Rückseite 86 des Sitzumhausungselements 82 eine weitere Sammellinse 116 als Teil der Kollimatoreinheit 118 angebracht. Die Sammellinse 116 sammelt einen Teil des nahezu achsparallelen Lichtstrahls 120 und koppelt diesen Teil in einen starr ausgebildeten Lichtwellenleiter 122 ein, der von der Sammellinse 116 bis zu einer dem Gang 112 zugewandten äußeren Seite des Sitzumhausungselements 82 geführt ist. An einer Stelle eines Lichtaustritts ist in einer äußeren Oberfläche 124 des Sitzumhausungselements 82 ein von einer konkaven Fresnel-Linse aus Kunststoff gebildetes Lichtaustrittselement 94 integriert. In der Normalposition des Fluggastsitzes 72 tritt aus der Fresnel-Linse Licht aus, so dass eine schnelle und sichere Überprüfung der Normalposition des Fluggastsitzes 72 durch das Flugpersonal ermöglicht ist.

In diesem Ausführungsbeispiel wird demnach an zwei Stellen des Lichtführungswegs 90 zwischen dem Lichteintrittselement 92 zum Lichtaustrittselement 94, die sich von der Stelle des Lichteintritts in das Lichteintrittselement 92 und von der Stelle des Lichtaustritts aus dem Lichtaustrittselement 94 unterscheiden, in einer Normalposition des Fluggastsitzes 72 von der optischen Übertragungseinheit 88 berührungslos Licht zwischen dem als Rückenlehne ausgebildeten Sitzelement 78 und dem Sitzumhausungselement 82 des Fluggastsitzes 72 übertragen, die relativ zueinander bewegbar sind.

Die berührungslose Übertragung des Lichts erfolgt zudem in zwei diskreten, voneinander abgegrenzten Bereichen einer relativen Stellung der Rückenlehne und des Sitzumhausungselements 82 und entspricht dem Verlauf gemäß der Fig. 4, wenn anstelle des Schwenkwinkels α ein senkrechter Verfahrweg des Kopfstützenbereichs 108 der Rückenlehne aus der Normalposition als Parameter einer Darstellung verwendet wird.

**Bezugszeichen**

| | | | |
|---|---|---|---|
| 10 | Fluggastsitz | 60 | Sammellinse |
| 12 | Innenraum | 62 | Kollimatoreinheit |
| 14 | Boden | 64 | achsparalleler Lichtstrahl |
| 16 | Gang | 66 | Lichtwellenleiter |
| 18 | Sitzrichtung | 68 | Bereich |
| 20 | Sitzelement (Sitzboden) | 70 | Bereich |
| 22 | Sitzelement (Armlehne) | 72 | Fluggastsitz |
| 24 | Nutzposition | 74 | Innenraum |
| 26 | Freigabeposition | 76 | Sitzelement (Sitzboden) |
| 28 | Außenfläche | 78 | Sitzelement (Rückenlehne) |
| 30 | Armlehnenachse | 80 | Sitzelement (Beinauflage) |
| 32 | Sitzelement (Sitzstruktur) | 82 | Sitzumhausungselement |
| 34 | Sitzelement (Rückenlehne) | 84 | Boden |
| 36 | Sitzposition | 86 | innere Rückseite |
| 38 | Komfortposition | 88 | optische Übertragungseinheit |
| 40 | Spannungsversorgungseinheit | 90 | Lichtführungsweg |
| 42 | optische Übertragungseinheit | 92 | Lichteintrittselement |
| 44 | Lichtemissionseinheit | 94 | Lichtaustrittselement |
| 46 | Lichtsammeleinheit | 96 | Lichtwellenleiter |
| 48 | Lichteintrittselement | 98 | oberer Bereich |
| 50 | Lichtaustrittselement | 100 | Sitzrichtung |
| 52 | Lichtführungsweg | 102 | Lichtsammeleinheit |
| 54 | Leuchtdiode | 104 | optische Achse |
| 56 | Ansteuereinheit | 106 | Lichtwellenleiter |
| 58 | Sammellinse | 108 | Kopfstützenbereich |
| 110 | Seitenbereich | | |
| 112 | Gang | | |
| 114 | Sammellinse | | |
| 116 | Sammellinse | | |
| 118 | Kollimatoreinheit | | |
| 120 | achsparalleler Lichtstrahl | | |
| 122 | Lichtwellenleiter | | |
| 124 | äußere Oberfläche | | |
| 126 | Lichtquelle | | |
| α | Schwenkwinkel | | |
| αₘₐₓ | maximaler Schwenkwinkel | | |
| αₛ | Grenzschwenkwinkel | | |
| F1 | Brennpunkt | | |
| F2 | Brennpunkt | | |
| I | Lichtintensität | | |

## Patentansprüche

1. Passagiersitz, der ein erstes Sitzelement (20, 22, 32, 34; 76, 78, 80) und zumindest ein zweites Sitzelement (20, 22, 32, 34; 76, 78, 80) aufweist, die relativ zueinander bewegbar sind, und der auf einem Boden (14; 84) eines Transportmittels aufständerbar ist und zumindest eine optische Übertragungseinheit (42; 88) aufweist mit einem Lichteintrittselement (48; 92) und zumindest einem Lichtaustrittselement (50; 94), wobei
die optische Übertragungseinheit (42; 88) zumindest einen Lichtführungsweg (52; 90) aufweist, der vom Lichteintrittselement (48; 92) zum Lichtaustrittselement (50; 94) verläuft und entlang dem Licht führbar ist, wobei die optische Übertragungseinheit (42; 88) dazu vorgesehen ist, in zumindest einem Betriebszustand an zumindest einer Stelle des Lichtführungswegs (52; 90), die sich von einer Stelle eines Lichteintritts in das Lichteintrittselement (48; 92) und von einer Stelle eines Lichtaustritts aus dem Lichtaustrittselement (50; 94) unterscheidet, berührungslos Licht zu übertragen,
**dadurch gekennzeichnet, dass** die berührungslose Übertragung des Lichts von dem ersten Sitzelement (20, 22, 32, 34; 76, 78, 80) zu dem davon verschiedenen zweiten, relativ zum ersten Sitzelement (20, 22, 32, 34; 76, 78, 80) bewegbaren Sitzelement (20, 22, 32, 34; 76, 78, 80) in diskreten, voneinander abgegrenzten Bereichen (68, 70) einer relativen Stellung des ersten Sitzelements (20, 22, 32, 34; 76, 78, 80) und des zweiten Sitzelements (20, 22, 32, 34; 76, 78, 80) erfolgt.

2. Passagiersitz nach Anspruch 1,
**dadurch gekennzeichnet, dass**
die optische Übertragungseinheit (42; 88) eine Lichtemissionseinheit (44), die an dem ersten Sitzelement (20, 22, 32, 34; 76, 78, 80) angeordnet ist, und eine Lichtsammeleinheit (46; 102), die an dem zweiten, relativ zum ersten Sitzelement (20, 22, 32, 34; 76, 78, 80) bewegbaren Sitzelement (20, 22, 32, 34; 76, 78, 80) angeordnet ist, aufweist.

3. Passagiersitz nach Anspruch 1 oder 2,
**dadurch gekennzeichnet, dass**
der Lichtführungsweg (52; 90) zumindest teilweise von zumindest einem Lichtwellenleiter (66; 96, 106, 122) gebildet ist.

4. Passagiersitz nach einem der vorhergehenden Ansprüche,
**dadurch gekennzeichnet, dass**
die optische Übertragungseinheit (42; 88) zumindest eine Kollimatoreinheit (62; 118) aufweist.

5. Passagiersitz nach einem der vorhergehenden Ansprüche,
**dadurch gekennzeichnet, dass**
das Lichtaustrittselement (50; 94) von einem Strahlaufweitungselement gebildet ist.

6. Passagiersitz nach Anspruch 2,
**dadurch gekennzeichnet, dass**
das erste Sitzelement (20, 22, 32, 34; 76, 78, 80) von einem relativ zum Boden (14; 84) des Transportmittels fest angeordneten Sitzumhausungselement (82) gebildet ist.

## Claims

1. Passenger seat comprising a first seat element (20, 22, 32, 34 ; 76, 78, 80) and at least one second seat element (20, 22, 32, 34 ; 76, 78, 80) which are movable with respect to each other, and being mountable on a floor (14; 84) of a transport means, and comprising at least one optical transmission unit (42; 88) with a light entry element (48; 92) and at least one light exit element (50; 94),
the optical transmission unit (42; 88) comprising at least one light guiding path (52; 90) which extends from the light entry element (48; 92) to the light exit element (50; 94) and along which light is guidable, wherein the optical transmission unit (42; 88) is provided to transmit light in a contact-free manner, in at least one operating state, in at least one point of the light guiding path (52; 90) differing from a point of a light entry into the light entry element (48; 92) and from a point of a light exit out of the light exit element (50; 94),
**characterised in that** the contact-free transmission of light from the first seat element (20, 22, 32, 34 ; 76, 78, 80) to the second seat element (20, 22, 32, 34 ; 76, 78, 80) which is different therefrom and is movable with respect to the first seat element (20, 22, 32, 34 ; 76, 78, 80) is effected in discrete regions (68, 70) of a relative position of the first seat element (20, 22, 32, 34 ; 76, 78, 80) and the second seat element (20, 22, 32, 34 ; 76, 78, 80).

2. Passenger seat as claimed in claim 1,
**characterised in that**
the optical transmission unit (42; 88) comprises a light emission unit (44) which is arranged on the first seat element (20, 22, 32, 34 ; 76, 78, 80) and comprises a light collection unit (46; 102) which is arranged on the second seat element (20, 22, 32, 34 ; 76, 78, 80) that is movable with respect to the first seat element (20, 22, 32, 34 ; 76, 78, 80).

3. Passenger seat as claimed in claim 1 or 2,
**characterised in that**
the light guiding path (52; 90) is implemented at least partly by at least one light wave guide (66; 96, 106, 122).

4. Passenger seat according to one of the preceding claims,
**characterised in that**
the optical transmission unit (42; 88) comprises at least one collimator unit (62; 118).

5. Passenger seat according to one of the preceding claims,
**characterised in that**
the light exit element (50; 94) is implemented by a beam-widening element.

6. Passenger seat according to claim 2,
**characterised in that**
the first seat element (20, 22, 32, 34 ; 76, 78, 80) is implemented by a seat casing element (82) that is fixedly arranged with respect to the floor (14; 84) of the transport means.

## Revendications

1. Siège de passager comportant un premier élément de siège (20, 22, 32, 34 ; 76, 78, 80) et au moins un deuxième élément de siège (20, 22, 32, 34 ; 76, 78, 80), lesquels sont mobiles l'un par rapport à l'autre, le siège de passager pouvant être monté sur un plancher (14 ; 84) d'un moyen de transport et comportant au moins une unité de transmission optique (42 ; 88) avec un élément entrée de lumière (48 ; 92) et au moins un élément sortie de lumière (50 ; 94),
l'unité de transmission optique (42 ; 88) comportant au moins un chemin de guidage de lumière (52 ; 90), lequel s'étend de l'élément entrée de lumière (48 ; 92) à l'élément sortie de lumière (50 ; 94) et le long duquel de la lumière peut être guidée, l'unité de transmission optique (42 ; 88) étant prévue dans au moins un état opératif à transmettre de lumière sans contact en au moins un point du chemin de guidage de lumière (52 ; 90) différant d'un point d'une entrée de lumière dans l'élément entrée de lumière (48 ; 92) et d'un point d'une sortie de lumière de l'élément sortie de lumière (50 ; 94),
**caractérisé en ce que** la transmission de la lumière sans contact du premier élément de siège (20, 22, 32, 34 ; 76, 78, 80) au deuxième élément de siège (20, 22, 32, 34 ; 76, 78, 80), lequel diffère de celui et est mobile par rapport au premier élément de siège (20, 22, 32, 34 ; 76, 78, 80), est effectuée dans des régions (68, 70) d'une position relative du premier élément de siège (20, 22, 32, 34 ; 76, 78, 80) et du deuxième élément de siège (20, 22, 32, 34 ; 76, 78, 80), lesquelles régions (68, 70) étant discrètes et délimitées l'une de l'autre.

2. Siège de passager selon la revendication 1,
**caractérisé en ce que**
l'unité de transmission optique (42 ; 88) comporte une unité d'émission de lumière (44) disposée au premier élément de siège (20, 22, 32, 34 ; 76, 78, 80) et comporte une unité de collection de lumière (46 ; 102) disposée au deuxième élément de siège (20, 22, 32, 34 ; 76, 78, 80), lequel est mobile par rapport au premier élément de siège (20, 22, 32, 34 ; 76, 78, 80).

3. Siège de passager selon la revendication 1 ou 2,
**caractérisé en ce que**
le chemin de guidage de lumière (52 ; 90) est implémenté au moins partiellement par au moins un guide d'ondes optique (66 ; 96, 106, 122).

4. Siège de passager selon l'une quelconque des revendications précédentes,
**caractérisé en ce que**
l'unité de transmission optique (42 ; 88) comporte au moins une unité collimateur (62 ; 118).

5. Siège de passager selon l'une quelconque des revendications précédentes,
**caractérisé en ce que**
l'élément sortie de lumière (50 ; 94) est implémenté par un élément élargisseur de rayon.

6. Siège de passager selon la revendication 2,
**caractérisé en ce que**
le premier élément de siège (20, 22, 32, 34 ; 76, 78, 80) est implémenté par un élément de boîtier de siège (82), lequel est fermement disposé par rapport au plancher (14 ; 84) du moyen de transport.
